# EUROPÄISCHE PATENTSCHRIFT

(11) **EP 1 250 378 B1**
(45) Veröffentlichungstag und Bekanntmachung des Hinweises auf die Patenterteilung: **31.03.2004**
(21) Anmeldenummer: 00990664.5
(22) Anmeldetag: 06.12.2000
(51) Int. Cl.: C08G 75/04, C09D 181/02, C09J 181/02

(54) **STOFF FÜR BESCHICHTUNGEN UND VERKLEBUNGEN AUF DER BASIS VON POLYMEREN MIT THIOETHER-STRUKTUREINHEITEN SOWIE VERFAHREN ZU SEINER HERSTELLUNG**
MATERIAL FOR COATINGS AND ADHESIVES BASED ON POLYMERS COMPRISING THIOETHER STRUCTURAL UNITS AND METHOD FOR PRODUCING SAID COMPOUNDS
MATIERE POUR REALISER DES REVETEMENTS ET DES COLLAGES, A BASE DE POLYMERES A MOTIFS STRUCTURAUX THIOETHER, ET PROCEDE DE PRODUCTION CORRESPONDANT

(30) Priorität: 08.12.1999 DE 19959134; 08.06.2000 DE 10028358
(43) Veröffentlichungstag der Anmeldung: 23.10.2002
(73) Patentinhaber: Intron Jena Gesellschaft für Digitale Farbtransfer Drucktechnik mbH, 07751 Rothenstein (DE)
(72) Erfinder: KLEMM, Elisabeth, 99425 Weimar (DE); GORSKI, Ute, 07749 Jena (DE); HELBIG, Manfred, 07778 Dorndorf-Steudnitz (DE); GATTNAR, Klaus, 07745 Jena (DE); GORSKI, Detlef, 07749 Jena (DE)
(74) Vertreter: Kruspig, Volkmar, Dipl.-Ing.
(86) Internationale Anmeldenummer: PCT/EP2000/012309
(87) Internationale Veröffentlichungsnummer: WO 2001/042382

(56) Entgegenhaltungen:
- US-A- 3 872 151
- US-A- 3 877 971
- US-A- 3 996 257
- PATENT ABSTRACTS OF JAPAN vol. 003, no. 027 (C-039), 7. März 1979 (1979-03-07) & JP 54 003843 A (SHOWA HIGHPOLYMER CO LTD), 12. Januar 1979 (1979-01-12) & JP 54 003843 A (SHOWA HIGHPOLYMER) 12. Januar 1979 (1979-01-12)

## Beschreibung

Die Erfindung betrifft einen neuartigen Stoff zur Herstellung von Beschichtungen und Verklebungen auf der Basis von Polymeren mit Thioether-Struktureinheiten sowie ein neuartiges Verfahren zu seiner Herstellung.

Beschichtungen und Verklebungen werden technisch in großem Umfang und in vielfältiger Weise genutzt. Das Anwendungsspektrum reicht von Schutzschichten für Werkstoffoberflächen bis hin zu dekorativen Beschichtungen und umfasst auch Verklebungen der unterschiedlichsten Materialien, wie Glas, Kunststoffe und Metalle. Die Eigenschaften der für die Beschichtungen und Verklebungen verwendeten Polymere müssen dabei genau auf den jeweiligen Anwendungszweck sowie auf das zu beschichtende oder zu verklebende Material abgestimmt werden. Von besonderer Bedeutung sind die Anpassung der thermomechanischen Eigenschaften der Polymere an die zu beschichtenden oder zu verklebenden Materialien bzw. an den mit der Beschichtung oder Verklebung zu erreichenden Anwendungseffekt, eine möglichst niedrige Schrumpfung bei der Härtungsreaktion sowie eine hohe Haftung auf den Materialoberflächen. Durch den Einsatz von Prepolymeren können die Eigenschaften von daraus hergestellten Polymeren, wie Flexibilität, Haftung oder auch die Schrumpfung weitgehend beeinflusst werden.

Darüber hinaus besteht aus ökonomischer und ökologischer Sicht die Forderung nach kurzen Reaktionszeiten, insbesondere unter Nutzung von strahlungshärtenden, vorzugsweise photohärtenden Prozessen. Kurze Bestrahlungszeiten führen zu einer sehr vorteilhaften Energiebilanz und einem gutem Leistungsprofil. Außerdem sollen durch lösungsmittelfreies Arbeiten ökologische Schädigungen eingeschränkt werden.

Polymere für Beschichtungen und Verklebungen sollen außer den genannten Eigenschaften eine hohe Transparenz sowie eine Langzeit-UV- und Klimastabilität aufweisen. Nach der Härtung, die in möglichst kurzer Zeit und unter möglichst geringer Schrumpfung erfolgt, dürfen die Oberflächen nicht klebrig sein.

Die Herstellung der Ausgangskomponenten sollte synthetisch einfach, reproduzierbar und preiswert sein.

In der Anwendung befinden sich eine Anzahl von Beschichtungsmaterialien oder Klebstoffen, deren Ausgangskomponenten ganz oder teilweise auf Prepolymeren oder Oligomeren basieren.

So ist im Patent WO 96/12749 ein Silanoligomer der allgemeinen Formel (R³)-X-(R¹ₓ)-Y-Si(R²)₃, für die Beschichtung von Glasoberflächen beschrieben, wobei R³ eine polymerisierbare Gruppe, R¹ₓ das Rückgrat-Oligomer mit einem Molekulargewicht > 200, R² eine hydrolysierbare Gruppe und X bzw. Y Kopplungsgruppen darstellen. Die Beschichtungen zeigen eine ausreichende Haftung auf Glasoberflächen und erhöhen die Beständigkeit des Glases gegen Wasser bzw. verringern die Wasseraufnahme des Glases. Besonders durch die hydrolysierbaren Gruppen wird die gute Haftung auf der Glasoberfläche erzeugt. Ein nicht polares Rückgrat sorgt für die reduzierte Wasseraufnahme. Als polymerisierbare Gruppen werden neben radikalisch reagierenden Systemen, wie Acrylaten, Methacrylaten, Vinylethern oder Acrylamiden auch Thiol-En- bzw. Amin-En-Systeme sowie kationisch ringöffnende Epoxide eingesetzt. Das in einer Vorstufe hergestellte Rückgrat-Oligomer kann aus einem Polyolefin, Polyether, Polyester oder Polycarbonat bzw. auch deren Copolymeren bestehen. Durch den Einsatz von entsprechenden Polyolen und Isocyanaten wurden hierfür durch basische Katalyse auch Urethane hergestellt und verwendet. Das Silan-Oligomer wird mit anderen reaktiven Oligomeren oder Reaktivverdünnern zur Reaktion gebracht. Durch die Verwendung geeigneter Photo- oder kationischer Initiatoren werden Beschichtungsmaterialien mit niedrigem Glaspunkt und guten mechanischen Eigenschaften erhalten.

Die Herstellungsprozedur stellt sich jedoch als sehr umfangreich und mehrstufig dar.

In der US 4,243,793 werden Prepolymere für photochemisch härtende Beschichtungen durch Reaktion von aliphatischen Diisocyanaten mit Isocyanat-Endgruppen und einer Alkylseitenkette mit einer hydroxy-, mercapto- oder aminogruppenhaltigen olefinisch ungesättigten Verbindung offenbart. Dieses ungesättigte Prepolymer wird mit einem Photoinitiator und wahlweise einem Polymercaptan zur Herstellung photohärtender Beschichtungen versehen. Es wird versucht, die bisher bekannten Mängel photochemisch härtender Systeme zu beseitigen. Diese lagen vor allem in den zu langen Reaktionszeiten, den komplizierten Zusammensetzungen durch oft exotische und teure Komponenten begründet. Der nach verschiedenen Methoden durchgeführten Applikation der Beschichtungsmaterialien folgt die Härtung mit UV-Licht im Wellenlängenbereich von 200 nm bis 400 nm in 0,1 Sekunden bis 20 Minuten bei Temperaturen von 0° bis 100°C, vorzugsweise bei 20°C bis 40°C. Es werden transparente oder opake Beschichtungen erhalten.

In dem deutschen Patent DE 19 809 643 Al werden Beschichtungsmittel und Klebstoffe, ihre Verwendung und Verfahren zu ihrer Herstellung beschrieben. Die Formulierungen bestehen aus einem Bindemittel, einem Vernetzer und einem C₇-C₁₆-Alkan, das mit mindestens zwei Hydroxyl- oder Thiolgruppen oder mindestens einer Hydroxyl- und Thiolgruppe funktionalisiert ist. Hiermit sollen Beschichtungsmittel oder Klebstoffe zur Verfügung gestellt werden, die gegenüber den bisher bekannten einen erhöhten Feststoffgehalt aufweisen und emissionsarm sind. Durch die beschriebene Art der Formulierung sollen die Nachteile von verwendeten Reaktivverdünnern, wie das Anlösen weiterer Lackschichten bei der Applikation, die Erniedrigung der Thermostabilität und die Lichtbeständigkeit behoben werden. Aber gleichzeitig sollen die Materialien eine verbesserte Kratzfestigkeit und ein gutes Reflow-Verhalten zeigen. Das Bindemittel soll mit dem Vernetzer dreidimensionale Netzwerke bilden. Hierfür kann das Bindemittel beliebig viele funktionelle Gruppen, vorzugsweise aber solche wie das funktionalisierte Alkan aufweisen. Es werden besonders hydroxyfunktionalisierte Polyacrylate, Polyester, Polyurethane, acrylierte Polyurethane, acrylierte Polyester, Polylactone, Polycarbonate, Polyether und/oder (Meth-) Acrylatdiole eingesetzt. Als Vernetzer kommen hierbei alle Substanzen, die mit Hydroxylgruppen reagieren können in Betracht. Beispiele sind siloxangruppenhaltige Verbindungen, Anhydride oder Polyisocyanate. Den Beschichtungsmaterialien werden übliche Hilfsmittel und/oder Additive zugesetzt. Dies sind Slipadditive, Entschäumer, Polymerisationsinhibitoren, Mattierungsmittel, Verlaufsmittel und filmbildende Hilfsmittel. Die Beschichtungsmittel oder Klebstoffe werden vorzugsweise als nichtwässrige Lösungen oder Dispersionen mit organischen Lösungsmitteln formuliert.

Der Nachteil dieser Verbindungen liegt in ihrer Aushärtung, die auf thermischem Weg bei Temperaturen von vorzugsweise 60°C bis 180°C erfolgt.

Ein flüssiges strahlungshärtendes Beschichtungssystem wird in der US 4,120,721 beschrieben. Hier wird ein acrylat- oder methacrylatterminiertes Urethan-Prepolymer mit einem nicht wasserlöslichen Vinylmonomer-Verdünner, vorzugsweise einem Acrylat oder Methacrylat, einem Polythiol, welches mindestens zwei Thiolgruppen pro Molekül enthält und einem Photoinitiator beschrieben. Die Polythioether-Synthese wird durch Licht im Wellenlängenbereich von 200 bis 400 nm initiiert.

In der US 4,017,371 werden feste Styren-Allylalkohol-Copolymere offenbart, die in der Mischung mit flüssigen Polythiolen zu Polyen-Polythiol-Systemen, vorwiegend für Photoresist-Anwendungen, aushärten. Die festen Polyene können auch mit ungesättigten Isocyanaten zur Reaktion gebracht werden.

Ein entscheidender Nachteil dieses Patentes liegt in der Aushärtung mit radioaktiver Strahlung. Aber auch der Einsatz dieses bereits festen vorgebildeten Polyens stellt für die Löslichkeit in weiteren Folgeschritten eine Schwierigkeit dar.

Aus den genannten Gründen können die bekannten technischen Lösungen nicht alle von der Technik gestellten Forderungen erfüllen.

Die Aufgabe der Erfindung ist es daher, ein technisch einfach durchzuführendes sowie ökonomisch und ökologisch rationelles Verfahren zur Herstellung eines Stoffs für von Beschichtungen und Verklebungen zur Verfügung zu stellen, das für die Beschichtung und Verklebung von Glas, Kunststoffen und Metallen geeignet ist, sowie einen für die Beschichtung und Verklebung erforderlichen Stoff aufzuzeigen, wobei eine gezielte Einstellung der thermomechnischen Eigenschaften möglich ist und die Nachteile der bekannten technischen Lösungen beseitigt werden.

Die nach dem neuen Verfahren hergestellten Beschichtungen und Verklebungen sollen darüber hinaus eine hohe Transparenz sowie eine hohe Haftfestigkeit, Klima- und UV-Stabilität aufweisen. Die geforderten Eigenschaften sollen bei einer ausreichenden Tropfzeit aus den lösungsmittelfreien Ausgangskomponenten innerhalb kurzer Zeit im Bereich von einigen Minuten, einigen Sekunden oder kürzer und ohne eine notwendige Anwendung einer Schutzgasatmosphäre erreicht werden.

Die Aufgabe wird erfindungsgemäß dadurch gelöst, dass Beschichtungen und Verklebungen auf Basis von Polymeren mit Thioether-Struktureinheiten hergestellt werden. Dazu werden olefinische Verbindungen mit der allgemeinen Struktur
(CH₂=CR¹)ₙ-R² n = 2; 3; 4 R¹ = H; CH₃
R² = 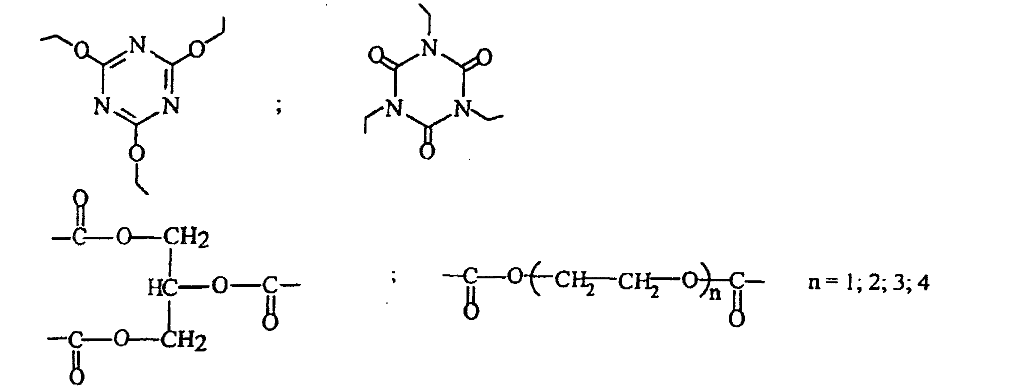 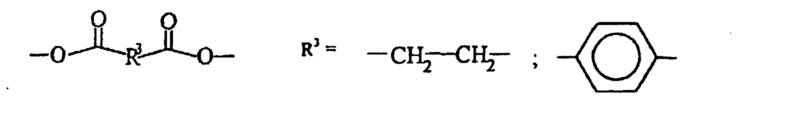 mit thiolfunktionalisierten Thiocarbamat-Prepolymeren der allgemeinen Struktur

**HS-R**^{**4**}**-S-CO-NH-R**^{**5**}**-NH-CO-S-R**^{**4**}**-SH**

**R**^{**4**} **=**

**―CH**_{**2**}**―CH**_{**2**}**―O―CH**_{**2**}**―CH**_{**2**}**―O―CH**_{**2**}**―CH**_{**2**}**―**

**R**^{**5**} **=**

**―CH**_{**2**}**―CH**_{**2**}**―CH**_{**2**}**―CH**_{**2**}**―CH**_{**2**}**―CH**_{**2**}**―**

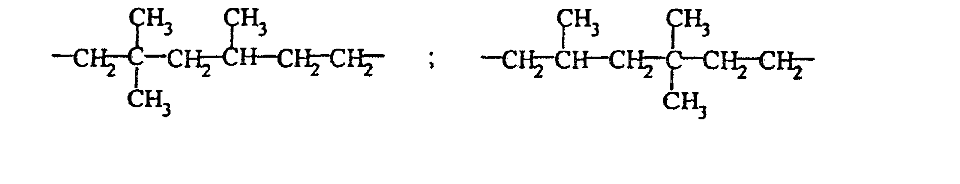

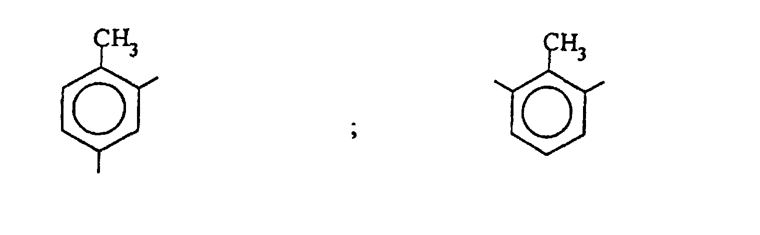

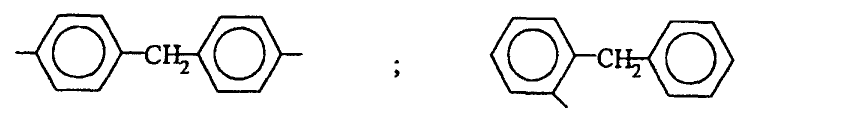

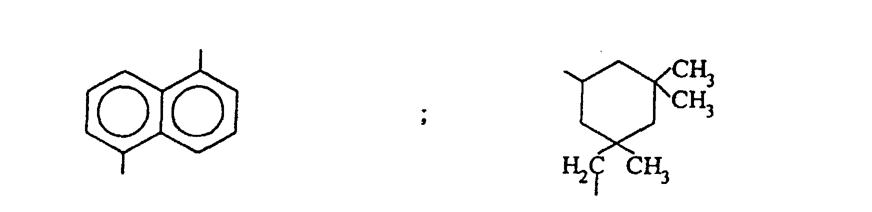

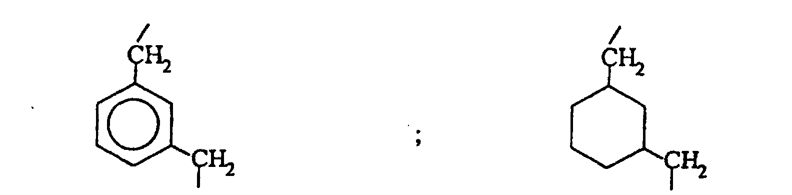

und substituierten Thiolen der allgemeinen Struktur
**(HS)**_{**n**}**-R**^{**6**} **n = 2; 3; 4**
R⁶ =

**―CH**_{**2**}**―CH**_{**2**}**―O―CH**_{**2**}**―CH**_{**2**}**―O―CH**_{**2**}**―CH**_{**2**}**―**

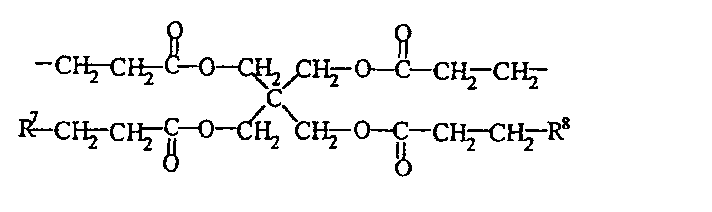

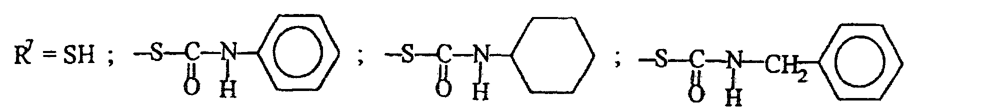

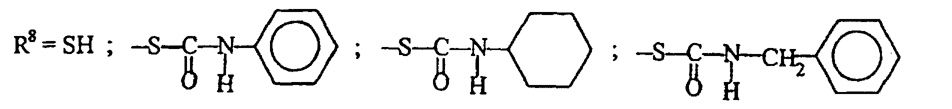

in Mischungen mit einem Molverhältnis von olefinischer Komponente : Thiol-Komponente : thiolterminiertem Prepolymer wie 1 : 0 : 1 bis 1 : 0,9 : 0,1 zu polymeren Thioether-Verbindungen umgesetzt.

Ein wesentlicher Bestandteil der Erfindung ist die Herstellung der thiolfunktionalisierten Prepolymere. Die Thiolfunktionalität wird dabei durch die basisch katalysierte Addition von Dithiolen mit Diisocyanaten unter Bildung von Thiocarbamatstrukturen erzeugt.

Die Reaktion zur Bildung der erfindungsgemäßen Polymeren kann sowohl thermisch oder photochemisch initiiert durchgeführt werden. Vorzugsweise erfolgt die Reaktion photochemisch.

Bei thermischer Initiierung der Reaktion werden zweckmäßig Temperaturen zwischen 20°C und 100°C angewendet. Als thermische Initiatoren werden an sich bekannte Verbindungen wie Azo-Verbindungen, z.B. α,α'-Azoisobutyronitril, 2,2'-Azobis-(2,4-dimethylvaleronitril), 2,2'-Azobis-(2-amidinopropan)dihydrochlorid oder Peroxide, wie Dibenzoylperoxid in einer Menge von 0,01 - 3,0 Gew.-% verwendet.

Die photochemische Herstellung der erfindungsgemäßen Beschichtungen und Verklebungen erfolgt vorteilhaft im Wellenlängenbereich zwischen 250 nm und 700 nm. Dabei werden als Photoinitiatoren Verbindungen wie Hydroxyketone, z.B. 1-Hydroxy-cyclohexyl-phenylketon, Monoacylphosphine, z.B. 2,4,6-Trimethylbenzoylbisphenylphosphinoxid, Bisacylphosphine, z.B. Bis(2,4,6-trimethylbenzoyl)phenylphosphinoxid, Benzoylderivate, z.B. 2-Hydroxy-2-methyl-1-phenylpropan-2-on, Benzophenon in einer Menge von 0,01 bis 3,5 Gew.-% allein oder in Mischung verwendet.

Zur Verbesserung der UV-Stabilität der Beschichtungen und Verklebungen können in die Reaktionsmischungen geeignete Lichtschutzmittel, wie z.B. Bis(1-octyloxy-2,2,6,6-tetramethyl-4-piperidyl)sebacat, 2-Hydroxyphenylbenzotriazole, 2-Hydroxybenzophenone, 2-Hydroxyphenyltriazine in einer Menge von 0,01 bis 5 Gew.-% eingemischt werden.

Die erfindungsgemäßen Beschichtungen und Verklebungen werden vorteilhaft aus lösungsmittelfreien Reaktionsmischungen erzeugt. Zur Erzeugung geringer Schichtdicken oder wenn die Anwendung niedrigviskose Reaktionsmischungen erfordert, können zur Verdünnung geeignete Lösungsmittel, wie z.B. Aceton, Chloroform, Butylacetat zugesetzt werden.

Die erfindungsgemäßen Beschichtungen und Verklebungen werden hergestellt, indem Mischungen der Komponenten mittels gebräuchlicher Beschichtungstechniken, wie Sprühen, Tauchen, Rakeln, Schleudern, manueller und/oder halbautomatischer und/oder vollautomatischer Dosiertechnik auf das zu beschichtende oder zu verklebende Material aufgebracht und anschließend gehärtet werden.

Die erfindungsgemäßen Beschichtungen und Verklebungen zeichnen sich dadurch aus, dass durch strukturelle Variation der Ausgangskomponenten und/oder ihrer Molverhältnisse in der Reaktionsmischung sowie durch Variation der Parameter der Photohärtung oder der thermischen Härtung die mechanischen Eigenschaften der erfindungsgemäßen Polymere von hart bis weich-flexibel variierbar sind. Sie können daher in vielfältiger Weise für transparente, schrumpfungsarme, schützende und dekorative Beschichtungen auf Glas, Kunststoffen und Metallen sowie für Verklebungen verwendet werden. Sie zeigen eine ausgezeichnete Klima- und UV-Stabilität sowie Haftung auf den genannten Materialien.

Die Aushärtezeit der erfindungsgemäßen Beschichtungen liegen, insbesondere bei Lichthärtung, im Bereich von 3 Minuten bis 5 Minuten, so dass kurze, bisher nicht mögliche Fertigungszeiten erreicht werden können.

Die Tropfzeit der Stoffmischung liegt hierbei im Bereich von 2 Tagen, so dass eine unproblematische und flexible Handhabung des Harzes mit einer entsprechenden Dosiertechnik und der Einsatz in manuellen, maschinellen und automatisierten Anlagen gewährleistet ist.

Die erfindungsgemäßen Beschichtungen haften auf Polyester- und PVC-Folien, auf Glas und auf metallischen Oberflächen.

Die erfindungsgemäßen Harze sind für die Beschichtung von Folienoberflächen geeignet, wobei Siebdruck, Farbtransferdruck oder Thermosublimationsdruck möglich ist, so dass ein Einsatz in allen gängigen Digitaldruckverfahren denkbar ist. Auf die bereits oben genannten konventionellen Beschichtungstechniken wird nochmals verwiesen.

Die festgestellten UV- und Außenbeständigkeiten entsprechen den VDA-Normen.

Im folgenden wird die Erfindung an einigen Ausführungsbeispielen näher erläutert.

### Ausführungsbeispiel 1

In einem geeigneten Reaktionsgefäß werden unter Ausschluss von Feuchtigkeit 2 mol 3,6-Dioxaoctan-1,8-dithiol und 1 mol 1,6-Diisoocyanato-2,2(4),4-trimethylhexan homogen vermischt. Dazu wird unter Rühren 0,002 - 0,005 Gew.-% 1,4-Diazabicyclo[2,2,2]octan (DABCO) gegeben. Die Reaktion verläuft unter Erwärmung und Zunahme der Viskosität. Es muss darauf geachtet werden, dass die Reaktionstemperatur 60°C bis 80°C nicht übersteigt. Eventuell muss gekühlt werden. Es wird das Prepolymer P1 erhalten.

Von dem so hergestellten thiolfunktionellen Prepolymer P1 werden 1,5 mol mit einem mol 2,4,6-Triallyloxy-1,3,5-triazin, einem Gew.-% aus einer Mischung von Bis(1,2,2,6,6-pentamethyl-4-piperidinyl)-sebacat und 1-Methyl-8-(1,2,2,6,6-pentamethyl-4-piperidinyl)-sebacat (Tinuvin 292) und 1,5 Gew.-% Darocur 1173 (eingetragene Marke) homogen vermischt. Nach den Entgasen wird die Mischung durch Rakeln auf die zu beschichtende Oberfläche aufgetragen. Die Härtung erlfolgt mit einer UV-Lampe, die eine Strahlungsintensität von größer 80 m³/cm² besitzt, in 20 Sekunden zu einer flexiblen Beschichtung.

### Ausführungsbeispiel 2

Zu einem mol Prepolymer P1, welches wie unter Ausführungsbeispiel 1 beschrieben hergestellt wurde, werden 0,25 mol Pentaerythritoltetrakis-(3-mercaptopropionsäure), ein mol 1,3,5-Triallyl-1,3,5-triazin-2,4,6(1H,3H,5H)-trion, ein Gew.-% Tinuvin 292, ein Gew.-% einer Mischung aus 2-[4-((2-Hydroxy-3-didecyoxypropyl)-oxy)-2-hydroxyphenyl]-4,6-bis(2,4-dimethylphenyl)-1,3,5-triazin und 2-[4-((2-Hydroxy-3-tridecyoxypropyl)-oxy]-2-hydroxyphenyl]-4,6-bis(2,4-dimethylphenyl)-1,3,5-triazin (Tinuvin 400), zwei Gew.-% Irgacur 1700 (eingetragene Marke) gegeben und homogen vermischt. Nach dem Entgasen wird das Beschichtungsmaterial mit halbautomatischer Dosiertechnik aufgetragen und mit der unter Ausführungsbeispiel 1 beschriebenen UV-Lampe 30 Sekunden bestrahlt. Die Beschichtungen sind flexibel, transparent und UV stabil.

### Ausführungsbeispiel 3

Die Herstellung des Prepolymeren P 1 erfolgt wie unter Ausführungsbeispiel 1 beschrieben. Zur Erhöhung der Haftung wird eine zweite Grundkomponente hergestellt. In einem geeigneten Reaktionsgefäß wird unter Feuchtigkeitsausschluss ein mol Pentaerythritoltetrakis-(3-mercaptopropionsäure) mit einem mol Phenylisocyanat und 500 ml trockenem Toluol vermischt. Nach Zugabe von 0,02-0,05 Gew.-% DABCO wird 24 Stunden bei Raumtemperatur gerührt. Nach Filtration über Kieselgel wird das Lösungsmittel am Rotationsverdampfer abgezogen und bis zur Gewichtskonstanz getrocknet. Das so hergestellte Reaktionsprodukt S4P wird für die Beschichtungsmaterialien eingesetzt.
Es werden 0,5 mol S4P, 0,25 mol des Prepolymeren P1, 0,25 mol Pentaerythritoltetrakis-(3-mercaptopropionsäure), ein Gew.-% Tinuvin 292, ein Gew.-% Tinuvin 400 mit 1,5 Gew.-% Irgacur 1700 (eingetragene Marke) gemischt und entgast. Mit manueller Dosiertechnik werden die Beschichtungsmaterialien aufgetragen und in 20 Sekunden mit der unter Ausführungsbeispiel 1 beschriebenen UV-Lampe bestrahlt.

### Ausführungsbeispiel 4

In einem geeigneten Reaktionsgefäß werden unter Ausschluss von Feuchtigkeit zwei mol 3,6-Dioxaoctan-1,8-dithiol und ein mol Isophorondiisocyanat vermischt. Dazu wird unter Rühren 0,002-0,005 Gew.-% DABCO gegeben. Die Reaktion verläuft unter Erwärmung und Zunahme der Viskosität. Es muss darauf geachtet werden, dass die Reaktionstemperatur 60°C bis 80°C nicht übersteigt. Gegebenenfalls muss gekühlt werden. Das so erhaltene Prepolymer P2 ist thiolfunktionalisiert.
Es werden 1,5 mol Prepolymer P2, ein mol 1,3,5-Triallyl-1,3,5-triazin-2,4,6(1H,3H,5H)-trion, ein Gew.-% Tinuvin 292, ein Gew.-% Tinuvin 400 und 0,5 Gew.-% Darocur 1173 vermischt und entgast. Nach manuellem Auftragen der Beschichtung wird 10 Sekunden und nach 30 Sekunden Pause weitere 90 Sekunden mit der unter Ausführungsbeispiel 1 beschriebenen UV-Lampe bestrahlt. Der entstehende Film ist transparent, aber deutlich härter als die in den Ausführungsbeispielen 1 bis 3 beschriebenen.

Alle in den Ausführungsbeispielen beschriebenen Beschichtungsmischungen können auch als Klebstoffe für geeignete Glas-Glas-, Glas-Kunstoff- oder Glas-Metall-Verklebungen eingesetzt werden.

Durch den Austausch des Photoinitiators durch einem thermischen Initiator, wie beispielsweise Dibenzoylperoxid, sind die erfindungsgemäßen Polymere auch durch eine thermische Härtung herstellbar. Im Falle der Verwendung von Dibenzoylperoxid sollten die Härtungszeiten 30 bis 180 Minuten bei Temperaturen von 60°C bis 80°C betragen.

Aus obigem geht hervor, daß die vorliegende Erfindung sowohl einen Stoff für Beschichtungen und Verklebungen auf der Basis von Polymeren mit Thioether-Struktureinheiten als auch ein Verfahren zum Herstellen eines Stoffs für Beschichtungen und Verklebungen auf der Basis von Polymeren mit Thioether-Struktureinheiten umfaßt.

## Patentansprüche

1. Stoff für Beschichtungen und Verklebungen auf Basis von Polymeren mit Thioether-Struktureinheiten,
**dadurch gekennzeichnet, dass**
olefinische Verbindungen mit der allgemeinen Struktur
**(CH**_{**2**}**=CR**^{**1**}**)**_{**n**}**-R**^{**2**} **n = 2; 3; 4** **R**^{**1**} **= H ; CH**_{**3**}
R² = 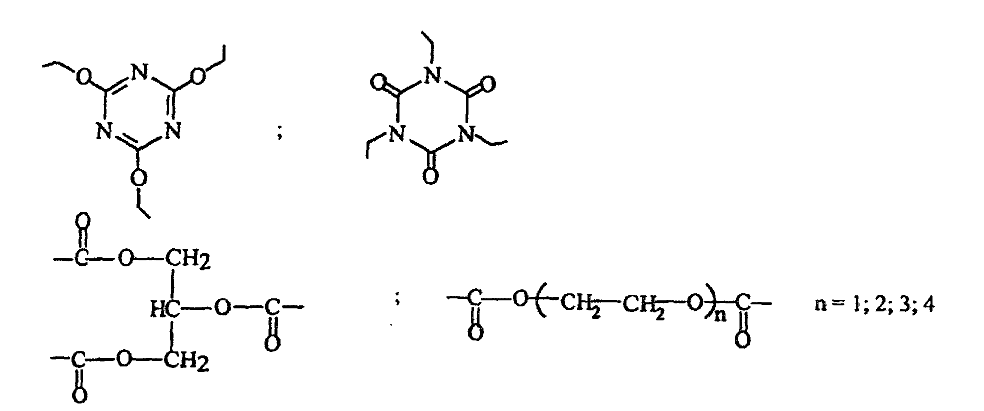 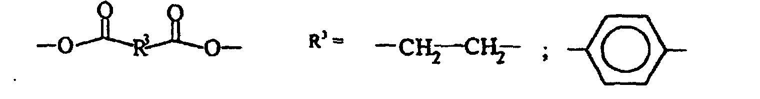 mit thiolfunktionalisierten Thiocarbamat-Prepolymeren der allgemeinen Struktur
**HS-R**^{**4**}**-S-CO-NH-R**^{**5**}**-NH-CO-S-R**^{**4**}**-SH**
**R**^{**4**} **=**
**―CH**_{**2**}**―CH**_{**2**}**―O―CH**_{**2**}**―CH**_{**2**}**―O―CH**_{**2**}**―CH**_{**2**}**―**
**R**^{**5**} **=**
**―CH**_{**2**}**―CH**_{**2**}**―CH**_{**2**}**―CH**_{**2**}**―CH**_{**2**}**―CH**_{**2**}**―** 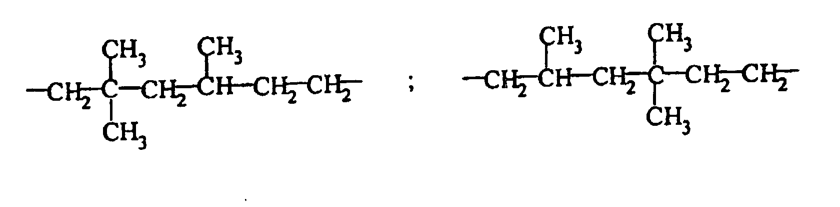 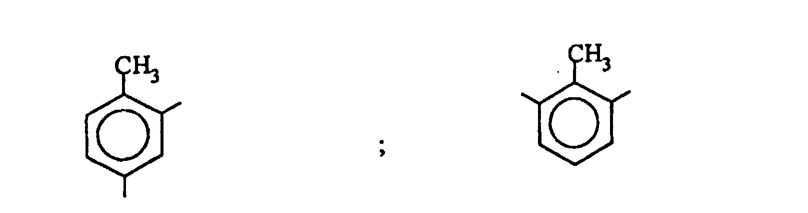 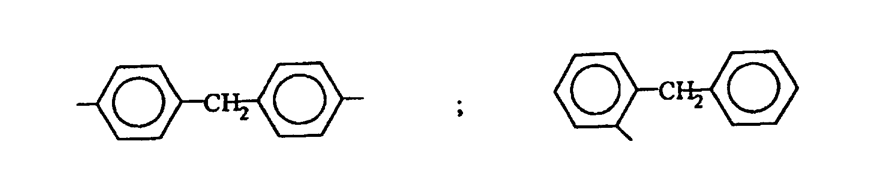 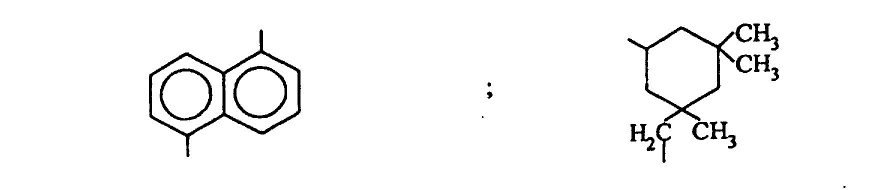 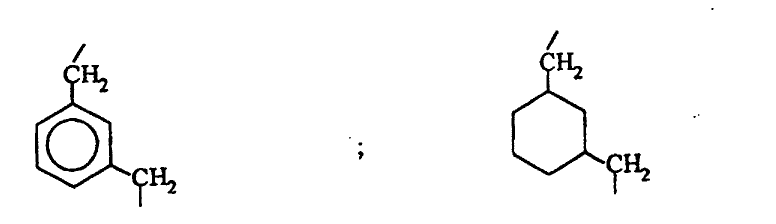
und substituierten Thiolen der allgemeinen Struktur
**( HS)**_{**n**}**-R**^{**6**} **n = 2; 3; 4**
**R**^{**6**} **=**
**―CH**_{**2**}**―CH**_{**2**}**―O―CH**_{**2**}**―CH**_{**2**}**―O―CH**_{**2**}**―CH**_{**2**}**―** 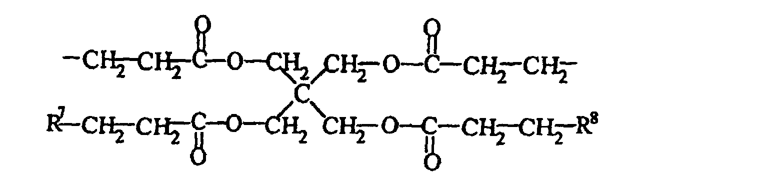 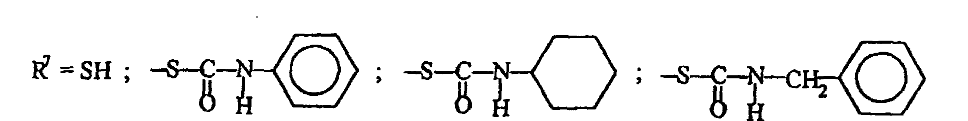 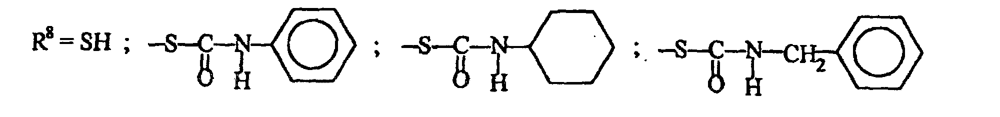
zu polymeren Thioetherverbindungen umgesetzt sind.

2. Stoff für Beschichtungen und Verklebungen nach Anspruch 1,
**dadurch gekennzeichnet, dass**
die Reaktionskomponenten in einem Mischungsverhältnis von olefinischer Komponente : Thiolkomponente : thiolterminiertem Prepolymer im Molverhältnis bis 1 : 0,9 : 0,1 stehen.

3. Stoff für Beschichtungen und Verklebungen nach Anspruch 1 oder 2,
**dadurch gekennzeichnet, dass**
thermische Initiatoren, nämlich Azo-Verbindungen ausgewählt aus αα*-Azoisobutyronitril, 2,2'-Azobis-(2,4-dimethylvaleronitril), 2,2'-Azobis-(2-amidinopropan)dihydrochlorid oder Dibenzoylperoxid in einer Menge von 0,01 - 3,0 Gew.-% verwendet werden.

4. Stoff für Beschichtungen und Verklebungen nach Anspruch 1 bis 3,
**dadurch gekennzeichnet, dass**
die Reaktion unter Verwendung von Photoinitiatoren, nämlich Hydroxyketonen, ausgewählt aus 1-Hydroxy-cyclohexyl-phenylketon, Monoacylphosphinen, ausgewählt aus 2,4,6-Trimethylbenzoylbisphenylphosphinoxid, Bisacylphosphinen, ausgewählt aus Bis(2,4,6-trimethylbenzoyl)phenylphosphinoxid, Benzoylderivaten, ausgewählt aus 2-Hydroxy-2-methyl-1-phenylpropan-2-on, Benzophenon in einer Menge von 0,01 bis 3,5 Gew.-% allein oder in Mischung verwendet werden.

5. Stoff für Beschichtungen und Verklebungen nach Anspruch 1 bis 4,
**dadurch gekennzeichnet, dass**
Lichtschutzmittel, ausgewählt aus Bis(1-octyloxy-2,2,6,6-tetra-methyl-4-piperidyl)sebacat, 2-Hydroxyphenylbenzotriazole, 2-Hydroxy-benzophenone, 2Hydroxyphenyltriazine in einer Menge von 0,01 bis 5 Gew.-% verwendet werden.

6. Stoff für Beschichtungen und Verklebungen nach Anspruch 1 bis 5,
**dadurch gekennzeichnet, dass**
die Komponenten mittels gebräuchlicher Beschichtungstechniken, wie Sprühen, Tauchen, Rakeln, Schleudern, manueller und/oder halbautomatischer und/oder vollautomatischer Dosiertechnik auf das zu beschichtende oder zu verklebende Material gebracht werden.

7. Verfahren zur Herstellung eines Stoffs für Beschichtungen und Verklebungen auf Basis von Polymeren mit Thioether-Struktureinheiten,
**dadurch gekennzeichnet, dass**
olefinische Verbindungen mit der allgemeinen Struktur
**(CH**_{**2**}**=CR**^{**1**}**)**_{**n**}**-R**^{**2**} **n = 2; 3; 4 R**^{**1**} **= H;CH**_{**3**}
**R**^{**2**} **=** 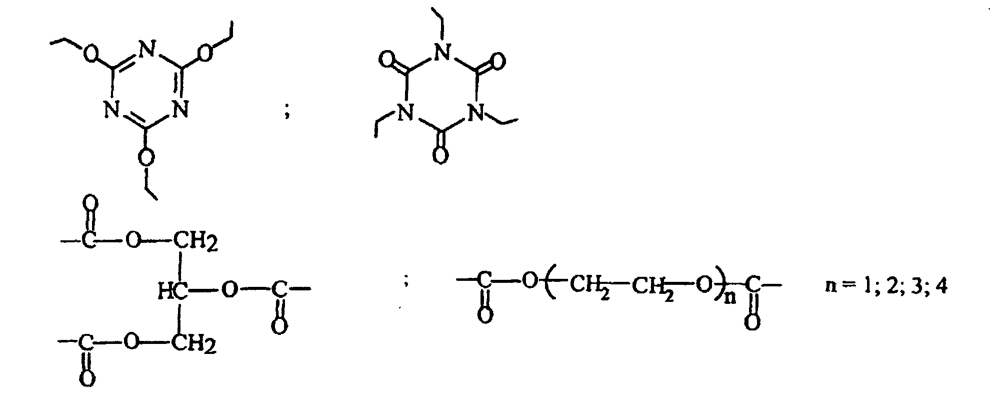 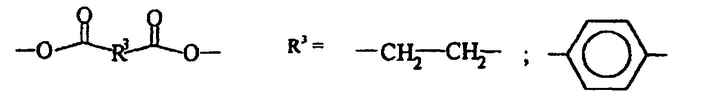 mit thiolfunktionalisierten Thiocarbamat-Prepolymeren der allgemeinen Struktur
**HS-R**^{**4**}**-S-CO-NH-R**^{**5**}**-NH-CO-S-R**^{**4**}**-SH**
**R**^{**4**} **=**
**―CH**_{**2**}**―CH**_{**2**}**―O―CH**_{**2**}**―CH**_{**2**}**―O―CH**_{**2**}**―CH**_{**2**}**―**
**R**^{**5**} **=**
**―CH**_{**2**}**―CH**_{**2**}**―CH**_{**2**}**―CH**_{**2**}**―CH**_{**2**}**―CH**_{**2**}**―** 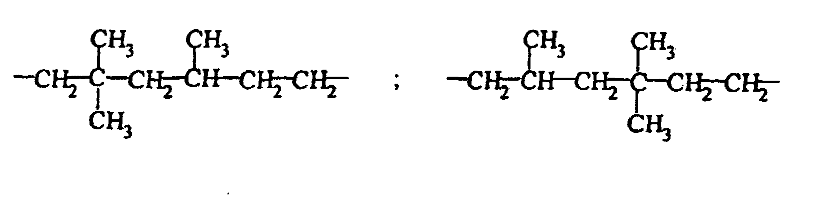 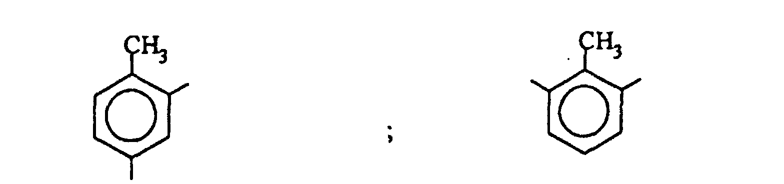 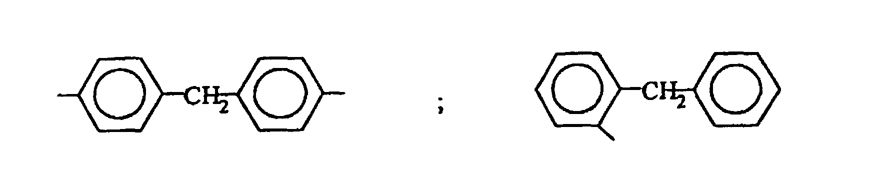 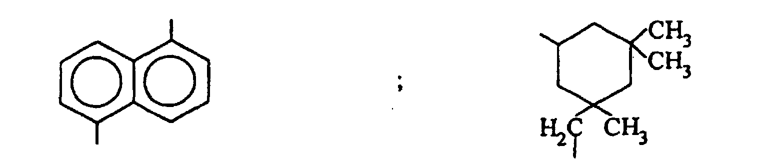 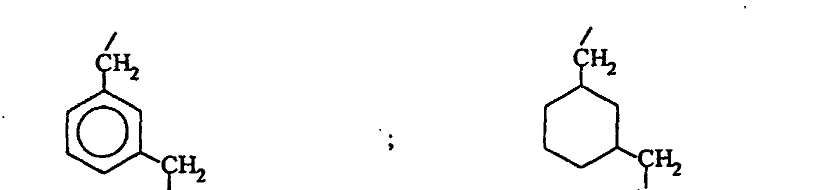
und substituierten Thiolen der allgemeinen Struktur
**( HS)**_{**n**}**-R**^{**6**} **n = 2; 3; 4**
**R**^{**6**} **=**
**―CH**_{**2**}**―CH**_{**2**}**―O―CH**_{**2**}**―CH**_{**2**}**―O―CH**_{**2**}**―CH**_{**2**}**―** 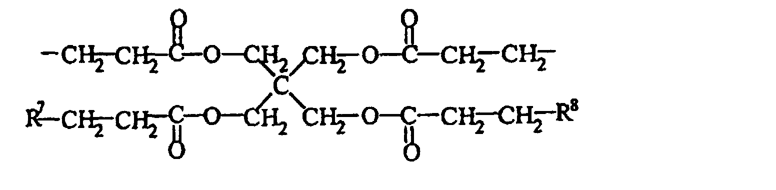 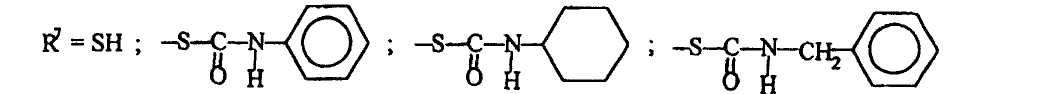 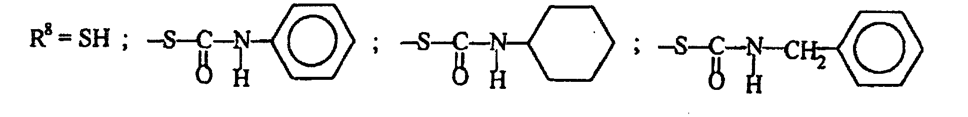
zu polymeren Thioetherverbindungen umgesetzt werden.

8. Verfahren nach Anspruch 7,
**dadurch gekennzeichnet, dass**
die Reaktionskomponenten in einem Mischungsverhältnis von olefinischer Komponente : Thiolkomponente : thiolterminiertem Prepolymer im Molverhältnis bis 1 : 0,9 : 0,1 stehen.

9. Verfahren nach Anspruch 7 oder 8,
**dadurch gekennzeichnet, dass**
die Reaktion thermisch oder photochemisch durchgeführt wird.

10. Verfahren nach Anspruch 7 bis 9,
**dadurch gekennzeichnet, dass**
die Reaktion thermisch im Temperaturbereich von 20°C bis 100°C durchgeführt wird.

11. Verfahren nach Anspruch 7 bis 9,
**dadurch gekennzeichnet, dass**
die Reaktion photochemisch im Wellenlängenbereich von 250 nm bis 700 nm durchgeführt wird.

12. Verfahren nach Anspruch 7 bis 10,
**dadurch gekennzeichnet, dass**
die Komponenten mittels gebräuchlicher Beschichtungstechniken, wie Sprühen, Tauchen, Rakeln, Schleudern, manueller und/oder halbautomatischer und/oder vollautomatischer Dosiertechnik auf das zu beschichtende oder zu verklebende Material gebracht werden.

13. Verfahren nach Anspruch 7 bis 9,
**dadurch gekennzeichnet, dass**
die Reaktion unter Verwendung von Photoinitiatoren, nämlich Hydroxyketonen, ausgewählt aus 1-Hydroxy-cyclohexyl-phenylketon, Monoacylphosphinen, ausgewählt aus 2,4,6-Trimethylbenzoylbisphenylphosphinoxid, Bisacylphosphinen, ausgewählt aus Bis(2,4,6-trimethylbenzoyl)phenylphosphinoxid, Benzoylderivaten, ausgewählt aus 2-Hydroxy-2-methyl-1-phenylpropan-2-on, Benzophenon in einer Menge von 0,01 bis 3,5 Gew.-% allein oder in Mischung verwendet werden.

14. Verfahren nach Anspruch 7 bis 10,
**dadurch gekennzeichnet, dass**
geeignete Lichtschutzmittel, ausgewählt aus Bis(1-octyloxy-2,2,6,6-tetramethyl-4-piperidyl)sebacat, 2-Hydroxyphenylbenzotriazole, 2-Hydroxy-benzophenone, 2Hydroxyphenyltriazine in einer Menge von 0,01 bis 5 Gew.-% verwendet werden.

15. Verfahren nach Anspruch 7 bis 14,
**dadurch gekennzeichnet, dass**
zur Verdünnung Aceton, Chloroform oder Butylacetat verwendet werden.

16. Verfahren nach Anspruch 7 bis 11,
**dadurch gekennzeichnet, dass**
die Komponenten mittels gebräuchlicher Beschichtungstechniken, wie Sprühen, Tauchen, Rakeln, Schleudern, manueller und/oder halbautomatischer und/oder vollautomatischer Dosiertechnik auf das zu beschichtende oder zu verklebende Material gebracht werden.

17. Verwendung eines Stoffes für Beschichtungen und Verklebungen nach einem der Patentansprüche 1 bis 6,
**dadurch gekennzeichnet, dass**
der Stoff zum Beschichten von Materialien eingesetzt wird, so daß diese Materialien nach der Beschichtung selbstklebend ausgebildet sind.

## Claims

1. Material for coatings and adhesives based on polymers with thioether structural units,
**characterized in that**
olefinic compounds with the general structure
(CH₂=CR¹)ₙ-R² n = 2; 3; 4 R¹ = H; CH₃
R² = 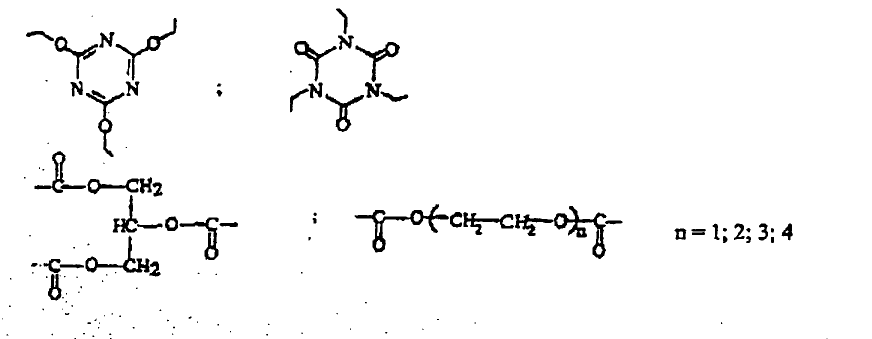 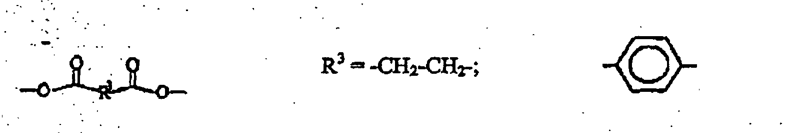 are reacted with thiol-functionalized thiocarbamate prepolymers of the general structure
HS-R⁴-S-CO-NH-R⁵-NH-CO-S-R⁴-SH
R⁴ =
-CH₂-CH₂-O-CH₂-CH₂-O-CH₂-CH₂-
R⁵ =
-CH₂-CH₂-CH₂-CH₂-CH₂-CH₂- 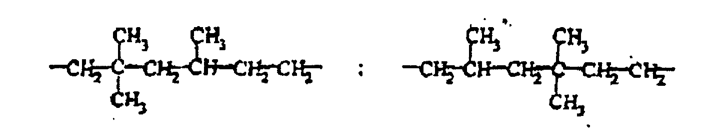 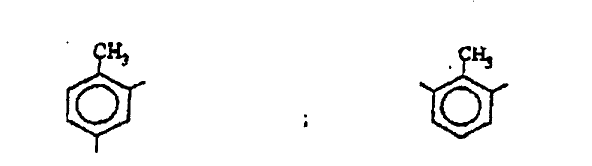 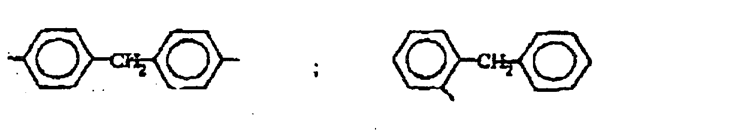 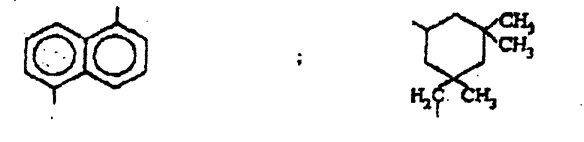 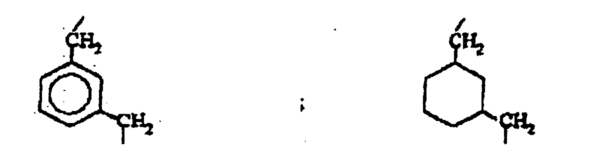
and substituted thiols of the general structure
(HS)ₙ-R⁶ n = 2; 3; 4
R⁶ =
-CH₂-CH₂-O-CH₂-CH₂-O-CH₂-CH₂- 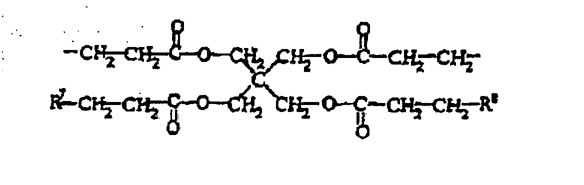 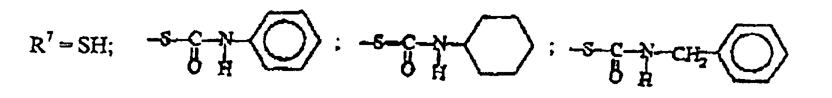 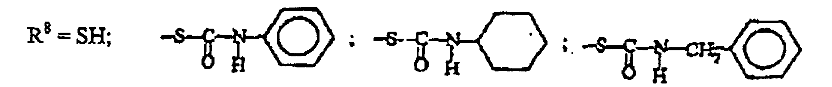
to give polymeric thioether compounds.

2. Material for coatings and adhesives according to claim 1,
**characterized in that**
the reaction components are in a mixing ratio of olefinic component : thiol component : thiol-terminated prepolymer in a molar ratio of up to 1 : 0.9 : 0.1.

3. Material for coatings and adhesives according to claim 1 or 2,
**characterized in that**
thermal initiators, that is to say azo compounds chosen from α,α*-azoisobutyronitrile, 2,2'-azobis-(2,4-dimethylvaleronitrile) and 2,2'-azobis-(2-amidinopropane) dihydrochloride, or dibenzoyl peroxide, are used in an amount of 0.01 - 3.0 wt.%.

4. Material for coatings and adhesives according to claim 1 to 3,
**characterized in that**
the reaction is carried out using photoinitiators, that is to say hydroxy-ketones, chosen from 1-hydroxy-cyclohexyl phenyl ketone, monoacylphosphines, chosen from 2,4,6-trimethylbenzoylbisphenylphosphine oxide, bisacylphosphines, chosen from bis(2,4,6-trimethylbenzoyl)phenylphosphine oxide, and benzoyl derivatives, chosen from 2-hydroxy-2-methyl-1-phenylpropan-2-one and benzophenone, in an amount of 0.01 to 3.5 wt.%, by themselves or in a mixture.

5. Material for coatings and adhesives according to claim 1 to 4,
**characterized in that**
light stabilizers, chosen from bis(1-octyloxy-2,2,6,6-tetramethyl-4-piperidyl) sebacate, 2-hydroxyphenylbenzotriazoles, 2-hydroxy-benzophenones and 2-hydroxyphenyltriazines, are used in an amount of 0.01 to 5 wt.%.

6. Material for coatings and adhesives according to claim 1 to 5,
**characterized in that**
the components are applied by means of conventional coating techniques, such as spraying, dipping, knife-coating, whirler coating or a manual and/or semi-automatic and/or completely automatic metering technique, to the material to be coated or to be glued.

7. Process for the preparation of a material for coatings and adhesives based on polymers with thioether structural units,
**characterized in that**
olefinic compounds with the general structure
(CH₂=CR¹)ₙ-R² n = 2; 3; 4 R¹ = H; CH₃
R² = 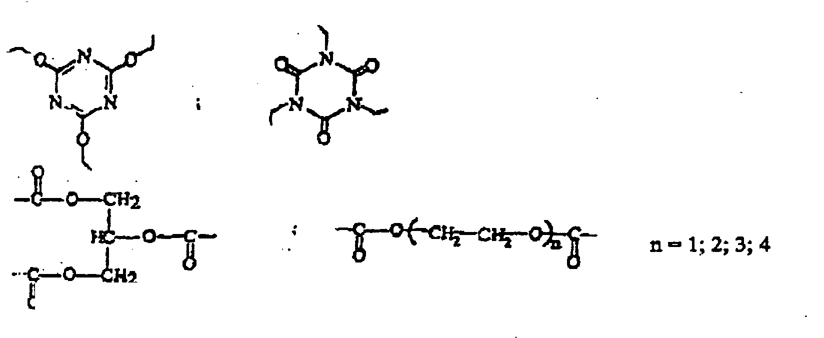 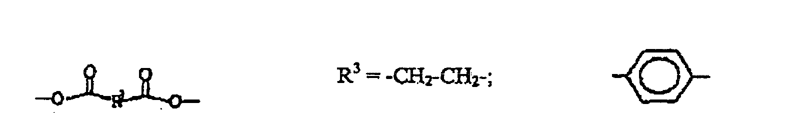 are reacted with thiol-functionalized thiocarbamate prepolymers of the general structure
HS-R⁴-S-CO-NH-R⁵-NH-CO-S-R⁴-SH
R⁴ =
- CH₂-CH₂-O-CH₂-CH₂-O-CH₂-CH₂-
R⁵ =
-CH₂-CH₂-CH₂-CH₂-CH₂-CH₂- 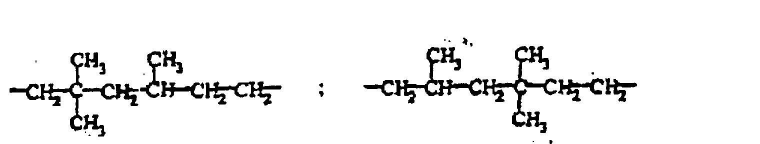 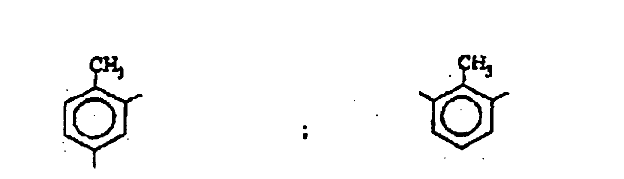 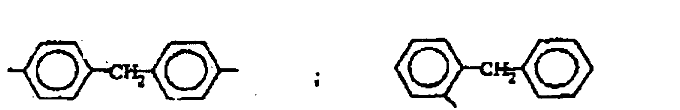 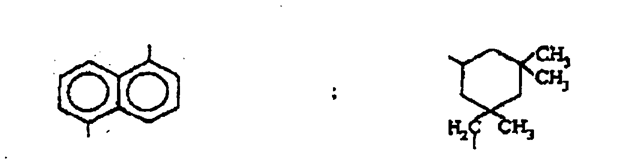 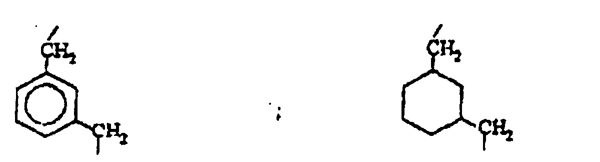
and substituted thiols of the general structure
(HS)ₙ-R⁶ n = 2; 3; 4
R⁶ =
-CH₂-CH₂-O-CH₂-CH₂-O-CH₂-CH₂- 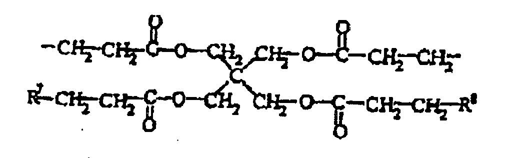 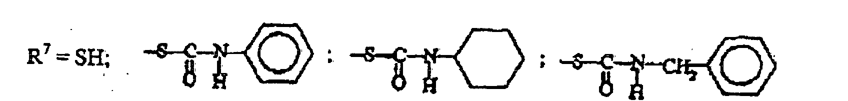 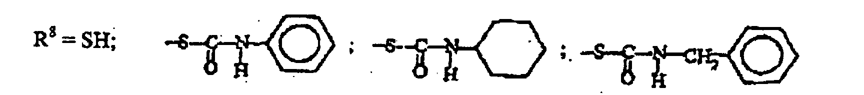
to give polymeric thioether compounds.

8. Process according to claim 7,
**characterized in that**
the reaction components are in a mixing ratio of olefinic component : thiol component : thiol-terminated prepolymer in a molar ratio of up to 1 : 0.9 : 0.1.

9. Process according to claim 7 or 8,
**characterized in that**
the reaction is carried out thermally or photochemically.

10. Process according to claim 7 to 9,
**characterized in that**
the reaction is carried out thermally in the temperature range from 20°C to 100°C.

11. Process according to claim 7 to 9,
**characterized in that**
the reaction is carried out photochemically in the wavelength range from 250 nm to 700 nm.

12. Process according to claim 7 to 10,
**characterized in that**
the components are applied by means of conventional coating techniques, such as spraying, dipping, knife-coating, whirler coating or a manual and/or semi-automatic and/or completely automatic metering technique, to the material to be coated or to be glued.

13. Process according to claim 7 to 9,
**characterized in that**
the reaction is carried out using photoinitiators, that is to say hydroxy-ketones, chosen from 1-hydroxy-cyclohexyl phenyl ketone, monoacylphosphines, chosen from 2,4,6-trimethylbenzoylbisphenylphosphine oxide, bisacylphosphines, chosen from bis(2,4,6-trimethylbenzoyl)phenylphosphine oxide, and benzoyl derivatives, chosen from 2-hydroxy-2-methyl-1-phenylpropan-2-one and benzophenone, in an amount of 0.01 to 3.5 wt.%, by themselves or in a mixture.

14. Process according to claim 7 to 10,
**characterized in that**
light stabilizers, chosen from bis(1-octyloxy-2,2,6,6-tetramethyl-4-piperidyl) sebacate, 2-hydroxyphenylbenzotriazoles, 2-hydroxy-benzophenones and 2-hydroxyphenyltriazines, are used in an amount of 0.01 to 5 wt.%.

15. Process according to claim 7 to 14,
**characterized in that** acetone, chloroform or butyl acetate is used for the dilution.

16. Process according to claim 7 to 11,
**characterized in that**
the components are applied by means of conventional coating techniques, such as spraying, dipping, knife-coating, whirler coating or a manual and/or semi-automatic and/or completely automatic metering technique, to the material to be coated or to be glued.

17. Use of a material for coatings and adhesives according to one of patent claims 1 to 6,
**characterized in that**
the material is employed for coating of materials such that these materials are self-adhesive after the coating.

## Revendications

1. Substance pour revêtements et collages à base de polymères avec des motifs structurels thioéther, **caractérisée en ce que** des composés oléfiniques de structure générale :
**(CH**_{**2**}**=CR**^{**1**}**)**_{**n**}**-R**^{**2**} **n = 2; 3; 4 R**^{**1**} **= H;CH**_{**3**}
**R**^{**2**} **=** 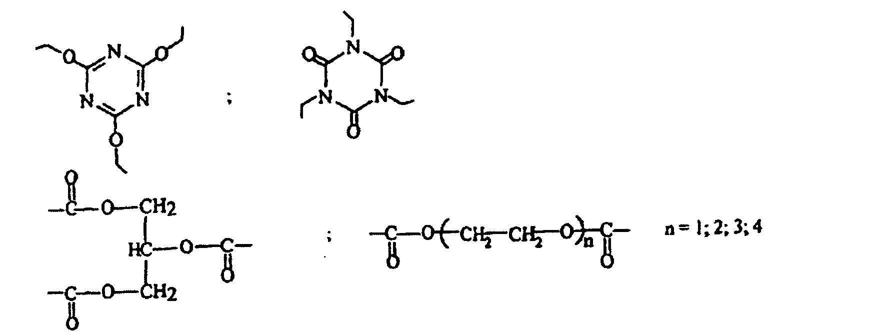 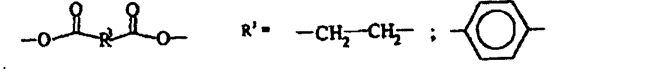 avec des prépolymères de thiocarbamate fonctionnalisés par des thiols de structure générale :
**HS-R**^{**4**}**-S-CO-NH-R**^{**5**}**-NH-CO-S-R**^{**4**}**-SH**
**R**^{**4**} **=**
**―CH**_{**2**}**―CH**_{**2**}**―O―CH**_{**2**}**―CH**_{**2**}**―O―CH**_{**2**}**―CH**_{**2**}**―**
**R**^{**5**} **=**
**―CH**_{**2**}**―CH**_{**2**}**―CH**_{**2**}**―CH**_{**2**}**―CH**_{**2**}**―CH**_{**2**}**―** 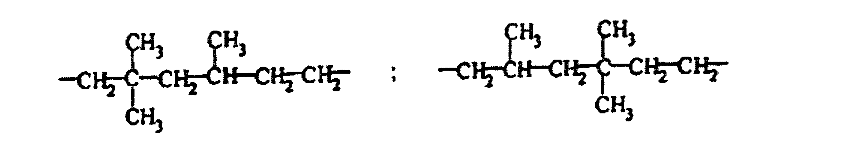 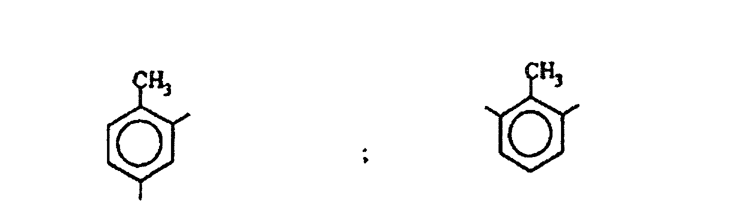 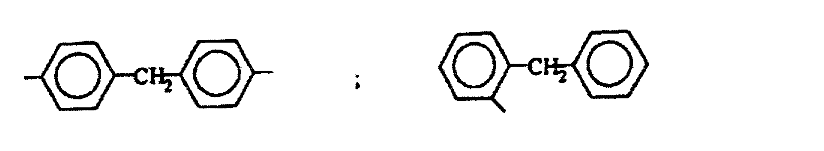 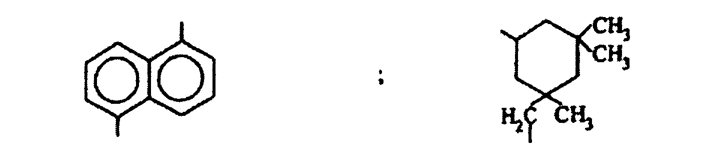 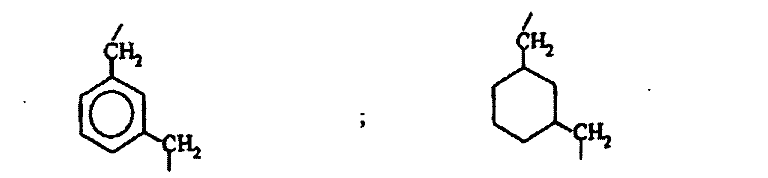
et des thiols substitués de structure générale :
**(HS)**_{**n**}**-R**^{**6**} **n = 2; 3; 4**
**R**^{**6**} **=**
**―CH**_{**2**}**―CH**_{**2**}**―O―CH**_{**2**}**―CH**_{**2**}**―O―CH**_{**2**}**―CH**_{**2**}**―** 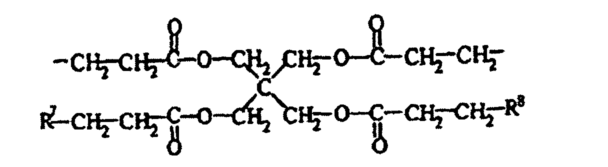 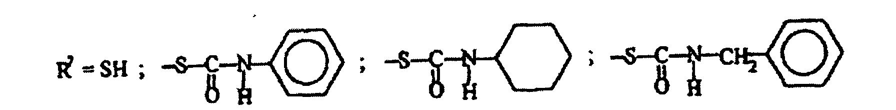 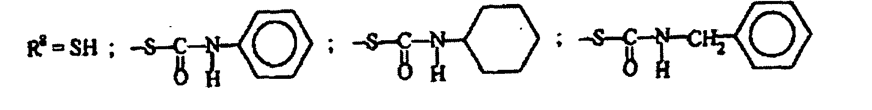
sont convertis en composés thioéther polymères.

2. Substance pour revêtements et collages selon la revendication 1, **caractérisée en ce que** les composants réactifs sont dans un rapport de mélange de composés oléfiniques : composés de thiol : prépolymère terminé par le thiol dans un rapport molaire allant jusqu'à 1 : 0,9 :0,1.

3. Substance pour revêtements et collages selon la revendication 1 ou 2, **caractérisée en ce que** des initiateurs thermiques, c'est-à-dire des composés azoïques, choisis parmi le groupe de l'αα*-azoisobutyronitrile, du 2,2'-azobis-(2,4-diméthyl-valéronitrile), du 2,2'-azobis-(2-amidinopropane)-dichlorhydrate ou du peroxyde de dibenzoyle sont utilisés dans une quantité allant de 0,01 - 3,0 % en poids.

4. Substance pour revêtements et collages selon l'une quelconque des revendications 1 à 3, **caractérisée en ce que** la réaction utilise des photo-initiateurs, c'est-à-dire des hydroxycétones, choisis parmi le groupe 1-hydroxy-cyclohéxyl-phénylcétone, des monoacylphosphines, choisis parmi le groupe 2,4,6-triméthybenzoylbisphénylphosphinoxyde, des bisacylphosphines, choisis parmi le groupe bis-(2,4,6-triméthybenzoyle)phénylphosphinoxyde, des dérivés de benzoyle, choisis parmi le groupe 2-hydroxy-2-méthyl-1-phényp-ropan-2-on, des benzophénones, utilisés dans une quantité allant de 0,01 à 3,5 % en poids seuls ou en mélange.

5. Substance pour revêtements et collages selon l'une quelconque des revendications 1 à 4, **caractérisée en ce que** des inhibiteurs de lumière, choisis parmi le groupe du sébaçate de bis(1-octyloxy-2,2,6,6-tétraméthyl-4-pipéridyle), du 2-hydroxyphénylènezotriazole, du 2-hydroxy-benzophénone, du 2-hydroxyphényltriazine sont utilisés dans une quantité allant de 0,01 à 5 % en poids.

6. Substance pour revêtements et collages selon l'une quelconque des revendications 1 à 5, **caractérisée en ce que** les composants sont appliqués au matériau à revêtir ou à coller au moyen de techniques de revêtement habituelles comme la pulvérisation, le trempage, le badigeonnage, la centrifugation, une technique de dosage manuelle et/ou semi-automatique et/ou entièrement automatique.

7. Procédé de fabrication d'une substance pour revêtements et collages à base de polymères avec des motifs structurels thioéther, **caractérisée en ce que** des composés oléfiniques de structure générale :
**(CH**_{**2**}**=CR**^{**1**}**)**_{**n**}**-R**^{**2**} **n = 2; 3; 4 R**^{**1**} **= H; CH**_{**3**}
**R**^{**2**} **=** 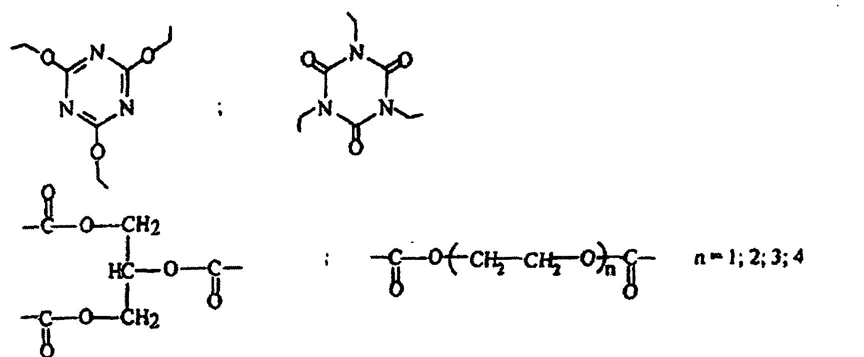 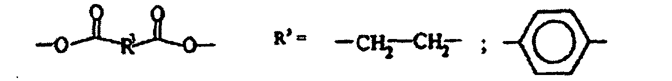 sont convertis en composés thioéther polymères, avec des prépolymères de thiocarbamate fonctionnalisés par des thiols de structure générale :
**HS-R**^{**4**}**-S-CO-NH-R**^{**5**}**-NH-CO-S-R**^{**4**}**-SH**
**R**^{**4**} **=**
**―CH**_{**2**}**―CH**_{**2**}**―O―CH**_{**2**}**―CH**_{**2**}**―O―CH**_{**2**}**―CH**_{**2**}**―**
**R**^{**5**} **=**
**―CH**_{**2**}**―CH**_{**2**}**―CH**_{**2**}**―CH**_{**2**}**―CH**_{**2**}**―CH**_{**2**}**―** 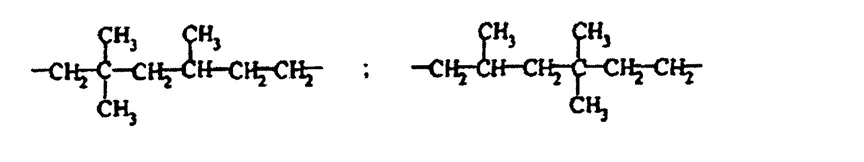 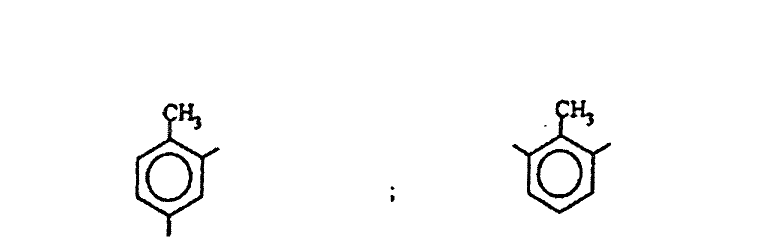 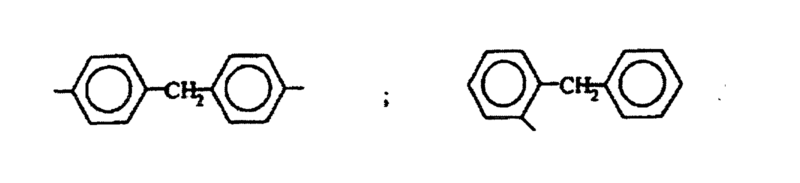 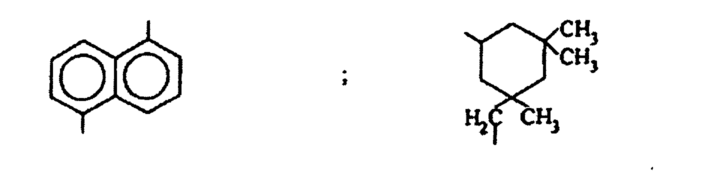 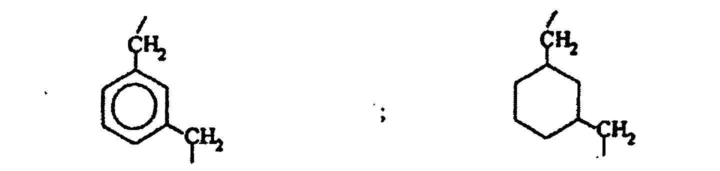
et des thiols substitués de structure générale :
**(HS)**_{**n**}**-R**^{**6**} **n = 2; 3; 4**
**R**^{**6**} **=**
**―CH**_{**2**}**―CH**_{**2**}**―O―CH**_{**2**}**―CH**_{**2**}**―O―CH**_{**2**}**―CH**_{**2**}**―**

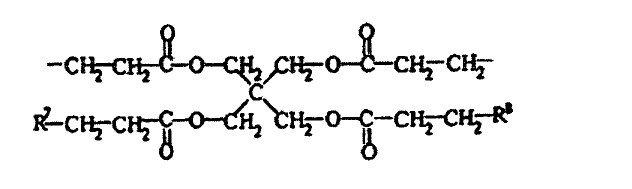

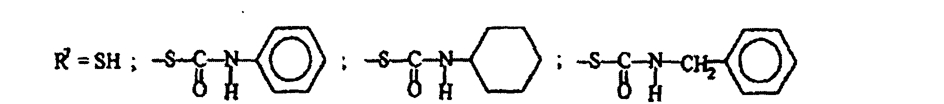

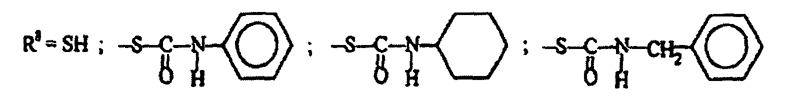

8. Procédé selon la revendication 7, **caractérisé en ce que** les composants réactifs sont dans un rapport de mélange de composés oléfiniques : composés de thiol : prépolymère terminé par des thiols dans un rapport molaire allant jusqu'à 1 : 0,9 : 0,1.

9. Procédé selon la revendication 7 ou 8, **caractérisé en ce que** la réaction est effectuée thermiquement ou photochimiquement.

10. Procédé selon la revendication 7 ou 9, **caractérisé en ce que** la réaction est effectuée thermiquement dans une plage de températures allant de 20 °C à 100 °C.

11. Procédé selon l'une quelconque des revendications 7 à 9, **caractérisé en ce que** la réaction est effectuée photochimiquement dans une plage de longueurs d'onde allant de 250 nm à 700 nm.

12. Procédé selon l'une quelconque des revendications 7 à 10, **caractérisé en ce que** les composants sont appliqués au matériau à revêtir ou à coller au moyen de techniques de revêtement habituelles comme la pulvérisation, le trempage, le badigeonnage, la centrifugation, une technique de dosage manuelle et/ou semi-automatique et/ou entièrement automatique.

13. Procédé selon l'une quelconque des revendications 7 à 9, **caractérisé en ce que** la réaction utilise des photo-initiateurs, c'est-à-dire du hydroxycétones, choisis parmi le groupe 1-hydroxycyclohéxyl-phénylcétone, des monoacylphosphines, choisis parmi le groupe 2,4,6-triméthybenzoylbisphénylphosphinoxyde, des bisacylphosphines, choisis parmi le groupe bis(2,4,6-triméthybenzoyl)-phénylphosphinoxyde, des dérivés de benzoyle, choisis parmi le groupe 2-hydroxy-2-méthyl-1-phénypropan-2-one, des benzophénone, utiliséq dans une quantité allant de 0,01 à 3,5 % en poids seuls ou en mélange.

14. Procédé selon l'une quelconque des revendications 7 à 10, **caractérisé en ce que en ce que** des inhibiteurs de lumière, choisis parmi le groupe du sébaçate de bis(1-octyloxy-2,2,6,6-tétraméthyl-4-pipéridyle), du 2-hydroxyphénylenzotriazole, du 2-hydroxybenzophénone, du 2-hydroxyphényltriazine sont utilisés dans une quantité allant de 0,01 à 5 % en poids.

15. Procédé selon l'une quelconque des revendications 7 à 14, **caractérisé en ce qu'**on utilise de l'acétone, du chloroforme ou de l'acétate de butyle pour une dilution.

16. Procédé selon l'une quelconque des revendications 7 à 11, **caractérisé en ce que** les composants sont appliqués au matériau à revêtir ou à coller au moyen de techniques de revêtement habituelles comme la pulvérisation, le trempage, le badigeonnage, la centrifugation, une technique de dosage manuelle et/ou semi-automatique et/ou entièrement automatique.

17. Utilisation d'une substance pour revêtements ou collages selon l'une quelconque des revendications 1 à 6, **caractérisée en ce que** la substance pour revêtements de matériaux est utilisée de telle sorte que ces matériaux sont constitués de manière autocollante après le revêtement.
